Europäisches Patentamt

European Patent Office

Office européen des brevets

(11) Numéro de publication: **0 391 772**
**A1**

(12) **DEMANDE DE BREVET EUROPEEN**

(21) Numéro de dépôt: **90400851.3**

(22) Date de dépôt: **29.03.90**

(51) Int. Cl.⁵: **F16G 3/16**

(30) Priorité: **07.04.89 FR 8904590**

(43) Date de publication de la demande:
**10.10.90 Bulletin 90/41**

(84) Etats contractants désignés:
**DE GB**

(71) Demandeur: **GORO S.A.**
**Avenue de Sylvie**
**F-77500 Chelles(FR)**

(72) Inventeur: **Schick, Jean-François**
**75, rue de l'Assomption**
**F-75016 Paris(FR)**

(74) Mandataire: **Tony-Durand, Serge**
**Cabinet Tony-Durand 77, rue Boissière**
**F-75116 Paris(FR)**

(54) **Appareil pour la fixation d'agrafes de jonction sur un tapis transporteur ou similaire.**

(57) Cet appareil est destiné à assurer la fixation, sur l'extrémité d'un tapis transporteur, d'une rangée d'agrafes de jonction (2) dotées de crampons de fixation disposés en attente, et ce au moyen d'un poinçon d'enfoncement des crampons et d'une matrice mobile destinée à assurer le rabattement des pointes de ceux-ci. Or ces organes font partie d'une tête de travail (5) comportant un bâti (6-7) apte à être installé en un point fixe sur tout support approprié, par exemple un établi (8). Cette tête de travail comporte par ailleurs une glissière (11) sur laquelle est monté coulissant un barreau mobile (10) destiné à servir de support à l'extrémité d'un tapis transporteur (1) et à la rangée d'agrafes de jonction (2) à fixer sur celle-ci. Ce barreau présente une série d'ouvertures (13) régulièrement espacées aptes à recevoir les têtes des crampons de fixation (4) qui se trouvent initialement en saillie sur l'une des branches des agrafes de jonction (2). Quant à la tête de travail (5), de position fixe, elle comporte des moyens aptes à assurer l'immobilisation du barreau mobile (10) dans chacune de ces positions successi- ves utiles de coopération avec cette tête de travail pour la fixation des différentes agrafes (2) les unes à la suite des autres.

FIG. 1

EP 0 391 772 A1

FIG. 2

## Appareil pour la fixation d'agrafes de jonction sur un tapis transporteur ou similaire

La présente invention est relative à la fixation d'une rangée d'agrafes de jonction sur l'extrémité d'un tapis transporteur ou similaire.

Plus précisément elle concerne la fixation des agrafes du type constitué par des éléments en U adaptés à être disposés à cheval sur une telle extrémité pour y être fixés au moyen de crampons, en fil métallique, affectant la forme d'un U renversé. Cette fixation est assurée par enfoncement de ces crampons à travers des trous prévus dans les deux branches de ces agrafes, puis rabattement des pointes ressortant au-dehors de celles-ci.

Pour faciliter la pose de telles agrafes, celles-ci affectent initialement une forme en V, l'une de leurs branches étant écartée de sa position normale. Dans ces conditions, après avoir placé l'extrémité d'un tapis ou similaire entre les agrafes de la rangée à fixer en place, il faut tout d'abord rabattre la branche initialement ouverte de celles-ci avant de procéder à l'enfoncement des crampons de fixation et au rabattement de leurs pointes.

Il existe actuellement un certain nombre d'appareils conçus pour réaliser ces différentes opérations. Ainsi, le brevet FR 2.590.955 décrit un appareil destiné à assurer la fixation, sur l'extrémité d'un tapis transporteur, d'une rangée d'agrafes de jonction dotées de crampons de fixation disposés en attente. Cet appareil comporte une tête de travail montée coulissante le long d'une plaque susceptible de servir de support à l'extrémité d'un tapis transporteur et à la rangée d'agrafes devant être fixées sur celle-ci. Cette tête de travail comporte, de part et d'autre de la rangée d'agrafes, un poinçon d'enfoncement des crampons de fixation et une matrice mobile destinée à assurer le rabattement des pointes de ceux-ci, ainsi qu'un cliquet d'avancement assurant le déplacement, pas à pas, de la tête de travail en regard des différentes agrafes à fixer.

Ainsi, cette tête de travail est en mesure d'assurer la fixation de chaque agrafe l'une après l'autre. Il y a donc lieu de déplacer cette tête au fur et à mesure sur toute la largeur de l'extrémité d'un tapis transporteur, cette extrémité restant elle-même fixe sur la plaque de guidage qui lui sert de support.

La tête de travail d'un tel appareil est soumise à des efforts importants lors de l'enfoncement des crampons de fixation et du sertissage des pointes de ceux-ci. Il convient donc que les moyens de guidage de cette tête de travail soient en mesure d'encaisser ces efforts. Ceci implique la réalisation de pièces ayant une résistance mécanique importante. De plus, ceci exige également un usinage précis des moyens de guidage de la tête mobile de travail. Il en résulte donc un prix de revient relativement élevé des appareils de ce genre.

C'est pourquoi la présente invention a pour but de réaliser un appareil susceptible d'assurer le même travail mais qui est conçu de façon à éviter les inconvénients exposés ci-dessus.

A cet effet, cet appareil est caractérisé en ce que sa tête de travail comporte un bâti apte à être installé en un point fixe sur tout support approprié, par exemple un établi, et qui comporte une glissière sur laquelle est monté coulissant un barreau mobile destiné à servir de support à l'extrémité d'un tapis transporteur et à la rangée d'agrafes de jonction à fixer sur celle-ci, ce barreau présentant une série d'ouvertures régulièrement espacées aptes à recevoir les têtes des crampons de fixation qui se trouvent initialement en saillie sur l'une des branches des agrafes de jonction, cependant que la tête de travail, de position fixe, comporte des moyens aptes à assurer l'immobilisation du barreau mobile dans chacune de ses positions successives utiles de coopération avec la tête de travail pour la fixation des différentes agrafes les unes à la suite des autres.

Ainsi dans le cas du présent appareil, la tête de travail reste fixe ce qui présente plusieurs avantages et notamment celui de permettre la réalisation de l'ensemble de l'appareil sous une forme plus simple et avec des pièces de résistance mécanique moindre que dans le cas d'une tête de travail mobile.

Dans une forme de réalisation particulière du présent appareil, les moyens d'immobilisation du barreau mobile, dans chacune de ses positions utiles, consistent en un cliquet apte à s'engager dans une des ouvertures de ce barreau sous l'action d'un ressort de rappel, un levier à commande manuelle permettant d'effacer momentanément ce cliquet pour pouvoir déplacer le barreau mobile d'une position de travail à la suivante.

Cependant dans une autre forme de réalisation de l'appareil selon l'invention, la tête fixe de travail comporte un mécanisme apte à commander l'avance, pas à pas, du barreau mobile de l'une de ses positions utiles de travail à la suivante, ce mécanisme étant commandé par un levier susceptible d'être actionné à la main.

Du reste d'autres particularités et avantages de l'appareil selon l'invention apparaitront au cours de la description suivante d'un exemple de réalisation de celui-ci. Cette description est donnée en référence aux dessins annexés à titre indicatif, et sur lesquels :

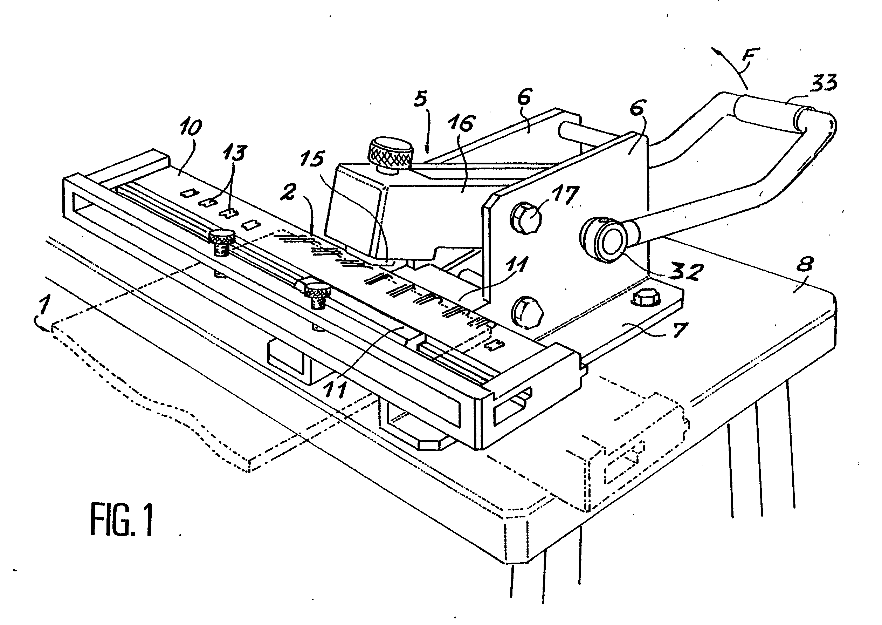

La figure 1 est une vue en perspective d'ensemble du présent appareil.

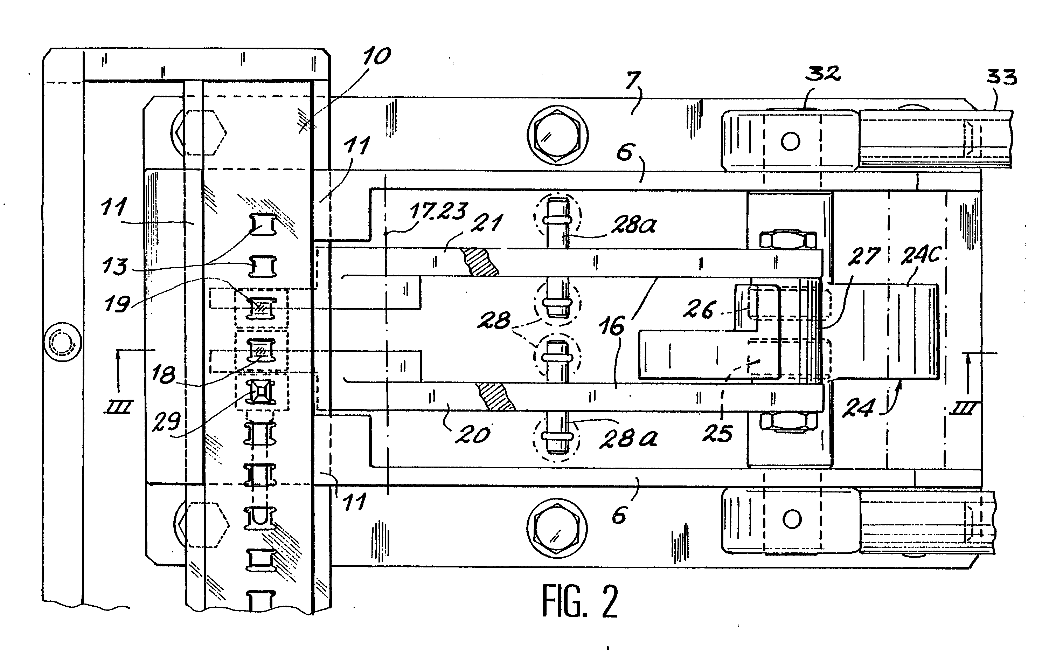

La figure 2 en est une vue en plan de dessus à échelle différente et avec arrachement.

La figure 3 en est une vue en coupe transversale selon la ligne III-III de la figure 2.

Les figures 4, 5 et 6 sont des schémas illustrant le mode d'actionnement de la came rotative de commande prévue dans le présent appareil.

La figure 7 est une vue de détail en perspective illustrant les moyens d'immobilisation du barreau mobile.

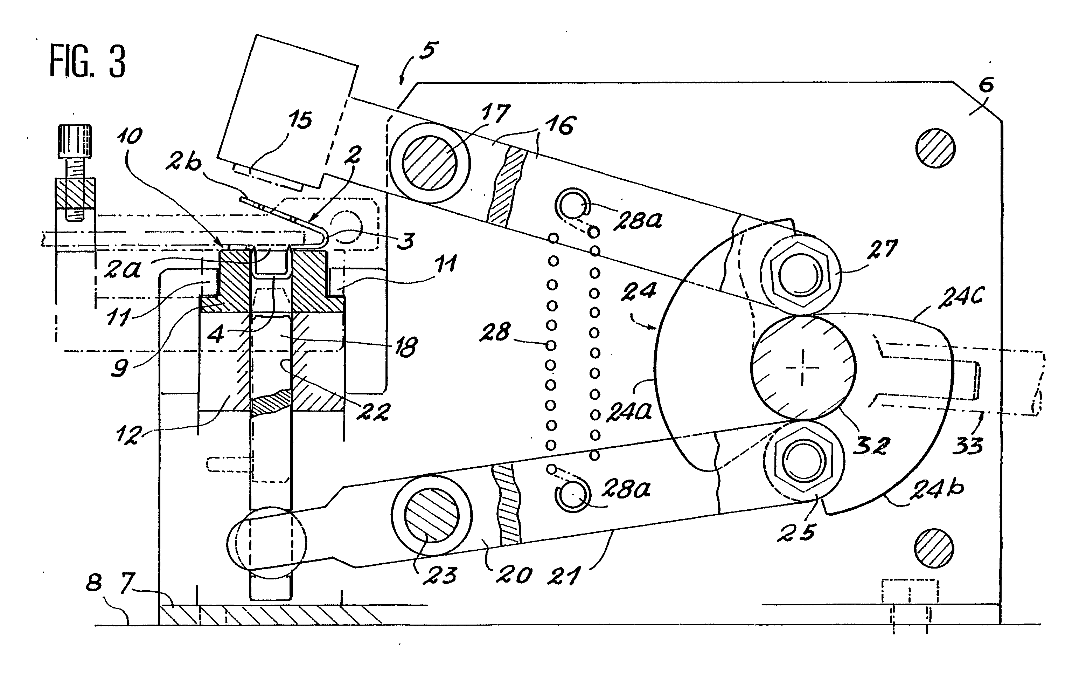

Comme déjà indiqué, le présent appareil est conçu de façon à assurer les différentes opérations nécessaires pour la fixation, sur l'extrémité d'un tapis transporteur 1, d'une rangée d'agrafes 2 destinées à permettre la jonction de celle-ci avec une autre extrémité de ce tapis. Les agrafes à fixer en place sont du type constitué par des éléments en forme de U comportant deux branches 2a et 2b reliées par des charnons 3 aptes à être réunis, au moyen d'un axe, avec les charnons d'une autre rangée similaire d'agrafes de jonction. L'une des deux branches de ces agrafes, en l'occurrence leur branche 2a, porte deux crampons de fixation 4 en fil métallique ayant chacun la forme d'un U renversé. Ces crampons sont alors montés en attente d'utilisation, c'est-à-dire que seules leurs pointes sont engagées à l'intérieur des trous de passage prévus dans cette branche 2a des agrafes. Ces crampons sont donc disposés en saillie à l'extérieur des agrafes (voir figure 3). Quant à la branche opposée 2b de ces dernières, elle affecte alors une forme "ouverte", c'est-à-dire qu'elle se trouve placée dans une position écartée de sa position normale dans laquelle elle sera disposée parallèlement à l'autre branche.

Le présent appareil comporte une tête fixe de travail qui est désignée par la référence générale 5. Celle-ci comporte un bâti comprenant deux joues verticales 6 solidaires d'un socle 7 destiné à être fixé par tous moyens appropriés, par exemple par boulonnage, sur un support tel qu'un établi 8 ou similaire.

A l'une de ses extrémités, cette tête de travail 5 comporte une glissière longitudinale dans laquelle est montée coulissante une règle 9 portant un barreau plat 10 destiné à servir de support à l'extrémité 1 d'un tapis transporteur. Cette glissière est constituée par deux mâchoires 11 disposées de part et d'autre d'une barre 12 servant de support à la réglette 9.

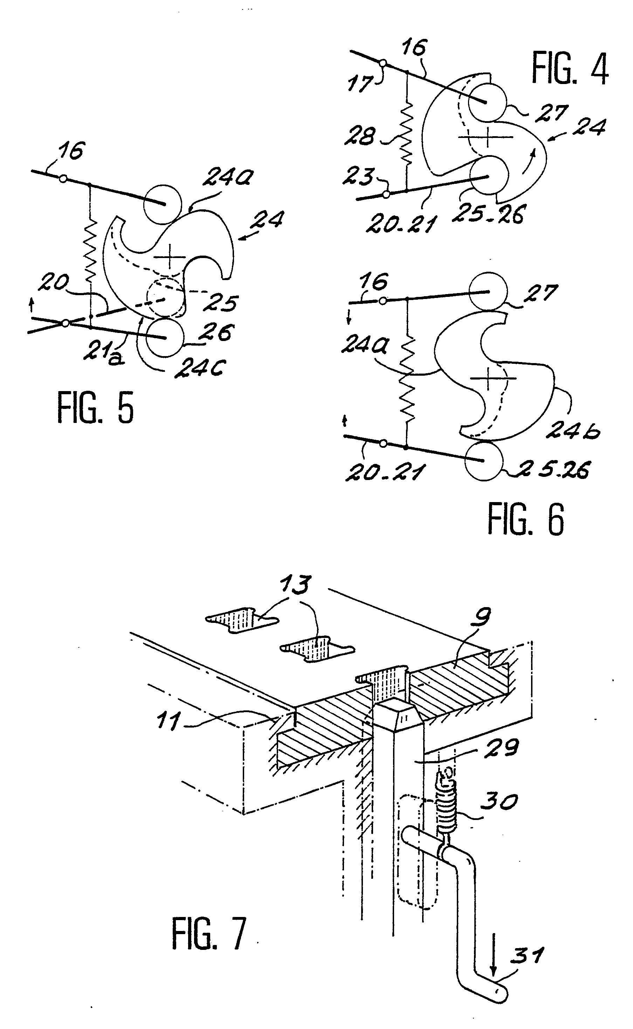

Le barreau mobile 10 et cette réglette 9 comportent une série d'ouvertures 13 régulièrement espacées qui sont destinées à recevoir les crampons 4 placés en attente sur les agrafes 2 portées par l'extrémité 1 du tapis transporteur. En effet, cette extrémité est destinée à être disposée dans la position représentée sur la figure 4, position pour laquelle les crampons 4 en attente sont tournés vers le bas, alors que la branche ouverte 2b des agrafes est placée vers le haut. L'engagement des différents crampons 4 à l'intérieur des ouvertures 13 assure par là-même un positionnement précis de la rangée d'agrafes 2 et de l'extrémité 1 du tapis transporteur sur le barreau mobile 10.

De part et d'autre de la position de la rangée d'agrafes 2, la tête de travail 5 comporte deux groupes d'outils destinés à agir sur ces agrafes et sur leurs crampons de fixation 4, en l'occurrence :
- d'une part, au dessus de la rangée d'agrafes 2, une matrice mobile 15 fixée à l'une des extrémités d'un levier 16 monté pivotant autour d'un axe 17 porté par le bâti 6,
- d'autre part, au dessous de la rangée d'agrafes, deux poinçons 18 et 19 montés mobiles dans le sens vertical dans des puits de guidage 22 prévus dans la barre 12, ces poinçons étant attelés à deux leviers distincts de commande 20 et 21 montés pivotants autour de deux axes 23 portés par le bâti.

Les extrémités opposées 25 et 26 de ces deux leviers sont placées au contact d'une came 24 portée par un axe rotatif 32 pouvant être actionné à la main au moyen d'une poignée 33 formant levier de commande. L'extrémité 27 du levier supérieur 16, qui est opposée à la matrice 15, est elle-même placée au contact de cette même came rotative 24 qui sera décrite en détail plus loin. A cet effet, les deux groupes de leviers 16, 20 et 21 peuvent être reliés par des ressorts de rappel 28 attachés à des axes 28a.

De préférence, la tête de travail 5 est conçue pour agir sur les crampons de fixation 4 de deux agrafes voisines 2 de jonction à deux stades différents de fixation de ces crampons, comme cela est du reste également le cas dans l'appareil décrit dans le brevet FR 2.590.955 mentionné précédemment.

C'est la raison pour laquelle il est prévu deux poinçons distincts 18 et 19 au-dessous de la rangée d'agrafes 2. Le premier poinçon 18 est destiné à assurer l'enfoncement des deux crampons 4 de fixation d'une agrafe 2, cependant que le second poinçon 19 est prévu pour servir d'enclume pour l'appui des deux crampons 4 de l'agrafe 2 précédente, lors du sertissage final des pointes de ces crampons, celles-ci ayant subi précédemment un début de rabattement lors de l'enfoncement initial des crampons correspondants. Quant à la matrice 15, elle comporte deux groupes distincts de rainures disposées en regard des pointes des crampons des deux agrafes voisines 2. Les rainures du premier groupe sont inclinées de façon à assurer un début de rabattement des pointes des crampons correspondants, par exemple à 45°. Quant aux rainures du second groupe, elles sont de faible profondeur de façon à assurer le sertissage final des pointes des crampons de l'agrafe 2 précédente.

La tête de travail 5 comporte également des moyens aptes à assurer l'immobilisation du barreau mobile 10 dans chacune de ses positions successives utiles de coopération avec cette tête, c'est-à-dire dans chaque position pour laquelle cette dernière est apte à assurer d'une part l'enfoncement des crampons de fixation 4 sur une agrafe 2 déterminée et le sertissage final des pointes des crampons 4 sur l'agrafe 2 précédente.

Dans l'exemple représenté à la figure 7, ces moyens d'immobilisation consistent en un cliquet 29 engagé à l'intérieur de l'une des ouvertures 13 du barreau mobile 10 sous l'action d'un ressort de rappel 30. Cependant une tirette 31 permet d'escamoter momentanément ce cliquet de façon à pouvoir déplacer le barreau 10 dans l'une de ses positions de travail, ceci étant réalisé par manoeuvre à la main.

La came rotative 24 comporte trois étages distincts de commande 24a, 24b et 24c de profils différents qui sont destinées à agir sur les trois leviers 16, 20 et 21 à partir de la position de repos représentée aux figures 3 et 4. Grâce à ces différentes étages de commande, il suffit à l'opérateur de faire pivoter, dans le sens de la flèche F, la poignée 33 servant de levier unique de commande, pour obtenir les différentes opérations nécessaires à la fixation de deux agrafes voisines 2, à savoir :

### 1°- Fermeture d'une agrafe :

Le début de rotation de la came 24 assure le pivotement du levier 16 dans le sens de la flèche F1 jusque dans la position représentée à la figure 5. Dans cette position, la matrice 15 se trouve pressée contre la branche supérieure 2b de l'agrafe correspondante qui est ainsi fermée à plat sur l'extrémité 1 du tapis transporteur.

### 2°- Sertissage simultané des pointes des crampons de l'agrafe précédente :

La descente de la matrice 15 a également pour effet de sertir les pointes des crampons 4 de l'agrafe précédente qui étaient déjà partiellement rabattues à 45°. Ce sertissage est rendu possible par le fait que le second poinçon 19, destiné à servir d'enclume, est par ailleurs amené en position relevée dans l'ouverture correspondante 13 du barreau mobile 10, et ce par pivotement du levier de commande correspondant 21 dans la position 21a (figure 5) sous l'action de l'étage respectif 24c de la came rotative 24.

### 3°- Enfoncement des crampons dans l'agrafe qui vient d'être fermée :

La poursuite de la rotation de la came rotative 24 a pour effet de faire pivoter le levier 20 selon la flèche F2. Or ce pivotement provoque le relèvement du premier poinçon 18, ce qui assure ainsi l'enfoncement des deux crampons 4 de fixation de l'agrafe 2 située en regard. Ces deux crampons se trouvent donc enfoncés à travers l'extrémité 1 du tapis transporteur et leurs pointes sont amenées à s'engager dans les trous prévus dans la branche supérieure 2b de l'agrafe 2 correspondante.

### 4°- Rabattement partiel des pointes de ces crampons :

La poursuite de la rotation de la came rotative 24 jusque dans la position représentée à la figure 6 a pour effet d'assurer un relèvement plus important encore du premier poinçon 18. Dans ces conditions, les pointes des crampons 4 correspondants sont amenées à s'engager dans les rainures de la matrice 15 qui se trouvent situées en regard, c'est-à-dire les rainures inclinées assurant un rabattement partiel de ces pointes à 45°.

### 5°- Retour de la tête de travail en position d'attente et déplacement du barreau mobile 10 :

Dès que la dernière opération mentionnée ci-dessus a été achevée, l'opérateur peut rabattre la poignée 33 dans sa position initiale de façon à assurer le relèvement de la matrice 15 et la descente des deux poinçons 18 et 19 dans les positions respectives représentées à la figure 3. Il convient alors de déplacer le barreau mobile 10 d'un pas pour l'amener dans sa position suivante de travail pour laquelle les pointes des crampons qui ont été partiellement rabattues seront définitivement serties, cependant que l'agrafe suivante subira la même phase initiale de travail déjà réalisée sur l'agrafe considérée.

Cependant, au lieu que l'avance pas à pas du barreau mobile 10 soit assurée à la main par l'opérateur, il est possible de prévoir un mécanisme apte à commander cette avance. Ce mécanisme peut comporter un cliquet de poussée venant agir successivement dans chacune des ouvertures 13 du barreau mobile 10, ce cliquet étant lui-même commandé par un levier actionné à la main.

Ainsi qu'il a déjà été indiqué, le principal avantage de l'appareil selon l'invention réside dans le fait que sa tête de travail est fixe. Ceci permet donc que les efforts supportés par cette tête de travail, lors de son utilisation, puissent être encaissés plus facilement sans qu'il soit nécessaire de prévoir une résistance mécanique élevée des pièces de l'ensemble de l'appareil. Par ailleurs, ceci supprime la nécessité de prévoir des moyens de guidage très précis et très résistants pour cette tête de travail. A ce sujet, Il faut observer que les moyens de guidage du barreau mobile sont évidemment beaucoup plus simples que ceux qui sont nécessaires dans le cas d'une tête mobile de travail, comme prévu dans le brevet FR 2.590.955 mentionné précédemment.

L'appareil selon l'invention, qui est destiné à être installé en un point fixe sur un établi ou autre support approprié, est plus particulièrement destiné à être utilisé pour les opérations de jonction de tapis transporteur ou courroies de largeur relativement limitée.

## Revendications

1. Appareil pour la fixation, sur l'extrémité d'un tapis transporteur, d'une rangée d'agrafes de jonction dotées de crampons de fixation disposés en attente, au moyen d'une tête de travail apte à assurer la fixation de ces agrafes l'une après l'autre, et comportant à cet effet, de part et d'autre de la rangée d'agrafes à fixer, un poinçon d'enfoncement des crampons et une matrice mobile destinée à assurer le rabattement des pointes de ceux-ci, caractérisé en ce que cette tête de travail (5) comporte un bâti (6-7) apte à être installé en un point fixe sur tout support approprié, par exemple un établi (8), et qui comporte une glissière (11-12) sur laquelle est monté coulissant un barreau mobile (10) destiné à servir de support à l'extrémité d'un tapis transporteur (1) et à la rangée d'agrafes de jonction (2) à fixer sur celle-ci, ce barreau présentant une série d'ouvertures (13) régulièrement espacées aptes à recevoir les têtes des crampons de fixation (4) qui se trouvent initialement en saillie sur l'une des branches (2a) des agrafes de jonction (2), cependant que la tête de travail (5), de position fixe, comporte des moyens aptes à assurer l'immobilisation du barreau mobile (10) dans chacune de des positions successives utiles de coopération avec cette tête de travail pour la fixation des différentes agrafes (2) les unes à la suite des autres.

2. Appareil de fixation selon la revendication 1, caractérisé en ce que les moyens d'immobilisation du barreau mobile (10), dans chacune de ses positions utiles, consistent en un cliquet (29) apte à s'engager dans une des ouvertures (13) de ce barreau sous l'action d'un ressort de rappel (30), une tirette (31) à commande manuelle permettant d'effacer momentanément ce cliquet pour pouvoir déplacer le barreau mobile (10) d'une position de travail à la suivante.

3. Appareil de fixation selon la revendication 1, caractérisé en ce que la tête fixe de travail (5) comporte un mécanisme apte à commander l'avance, pas à pas, du barreau mobile (10) de l'une de ses positions utiles de travail à la suivante, ce mécanisme étant actionné par un levier susceptible d'être manoeuvré à la main.

4. Appareil de fixation selon l'une des revendications précédentes, caractérisé en ce qu'indépendamment des moyens d'immobilisation et/ou d'avancement du barreau mobile (10), la tête de travail (5) comporte un levier unique de commande (33) actionnant une came rotative (24) commandant deux leviers pivotants (16 et 20) agissant respectivement sur la matrice mobile (15) destinée à assurer la fermeture des agrafes de jonction (2) et le rabattement ultérieur des pointes des crampons de fixation (4) et sur le poinçon (18) d'enfoncement de chacun de ces crampons de fixation.

5. Appareil de fixation selon la revendication 4, caractérisé en ce que la tête fixe de travail (5) étant conçue pour agir sur les crampons de fixation (4) de deux agrafes voisines de jonction (2) à deux stades différents de fixation de ces crampons, cette tête comporte, en regard de la matrice mobile (15), deux poinçons distincts, l'un (18) pour l'enfoncement des crampons de fixation (4) correspondants dans une agrafe (2) déterminée et l'autre (19) pour servir d'enclume lors du sertissage des pointes des crampons de fixation (4) de l'agrafe (2) précédente, la matrice mobile (15) comportant deux groupes distincts de rainures aptes à assurer respectivement un début de rabattement des pointes des crampons de fixation (4) de la première agrafe (2) considérée et un sertissage final des pointes des crampons de fixation (4) de l'agrafe précédente, cependant que la came rotative (24) de commande comporte trois étages distincts de commande agissant respectivement sur deux leviers (20 et 21) actionnant les deux poinçons (18 et 19), et sur un troisième levier (16) actionnant la matrice mobile (15).

FIG. 1

EP 0 391 772 A1

FIG. 2

EP 0 391 772 A1

FIG. 3

FIG. 4

FIG. 5

FIG. 6

FIG. 7

Office européen
des brevets

**RAPPORT DE RECHERCHE EUROPEENNE**

Numero de la demande

EP  90 40 0851

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | FR-A-2 590 955  (GORO)<br>* Page 5, ligne 28 - page 9, ligne 1; figures 1-8 *<br>--- | 1,2,4,5 | F 16 G    3/16 |
| Y | FR-A-  705 733  (HERTEL)<br>* Page 1, lignes 1-10; page 2, lignes 59-96; figures 4-6 *<br>--- | 1,2,4,5 | |
| A | FR-A-  660 741  (LARSON)<br>* Page 2, ligne 69 - page 3, ligne 23; figures 3-5 *<br>--- | 4 | |
| A | GB-A-2 202 605  (FENNER)<br>* Page 23, ligne 8 - page 24, ligne 4; figure 11 *<br>----- | 4 | |

DOMAINES TECHNIQUES
RECHERCHES (Int. Cl.5)

F 16 G

Le présent rapport a été établi pour toutes les revendications

| Lieu de la recherche | Date d'achèvement de la recherche | Examinateur |
|---|---|---|
| LA HAYE | 18-07-1990 | BARON C. |